# EUROPÄISCHE PATENTSCHRIFT

(11) **EP 1 060 463 B1**
(45) Veröffentlichungstag und Bekanntmachung des Hinweises auf die Patenterteilung: **26.01.2005**
(21) Anmeldenummer: 99936313.8
(22) Anmeldetag: 25.05.1999
(51) Int. Cl.: G08G 1/14, G08G 1/0968

(54) **VORRICHTUNG UND VERFAHREN ZUM AUFFINDEN EINES GEPARKTEN FAHRZEUGS**
DEVICE AND METHOD FOR LOCATING A PARKED VEHICLE
DISPOSITIF ET PROCEDE POUR RETROUVER UN VEHICULE STATIONNE

(30) Priorität: 22.05.1998 DE 19823039; 03.04.1999 DE 19915183
(43) Veröffentlichungstag der Anmeldung: 20.12.2000
(73) Patentinhaber: Brust, Hans-Detlef, 66125 Dudweiler (DE); Kilcioglu, Mehmet Ali, 70199 Stuttgart (DE)
(72) Erfinder: Brust, Hans-Detlef, 66125 Dudweiler (DE); Kilcioglu, Mehmet Ali, 70199 Stuttgart (DE)
(86) Internationale Anmeldenummer: PCT/DE1999/001538
(87) Internationale Veröffentlichungsnummer: WO 2000/034933

(56) Entgegenhaltungen:
- EP-A- 0 785 519
- WO-A-98/01843
- FR-A- 2 754 093
- US-A- 5 565 874

## Beschreibung

Viele Kraftfahrzeugbesitzer stehen vor dem Problem, den Standort Ihres Fahrzeuges einige Zeit, nachdem sie es geparkt haben, wiederzufinden. Dieses Problem stellt sich vor allem dann, wenn sie ihr Fahrzeug nicht auf einem häufiger benutzten "Stammplatz" abstellen konnten - also vor allem bei Einkaufs- und Freizeitfahrten und bei Besuchen in fremden Städten.

Die einfachste Lösung - vielleicht einmal abgesehen von einem intensiven Gedächtnistraining des Fahrers - bestände natürlich darin, daß sich der Fahrzeugbesitzer den Standort seines Fahrzeugs auf einem Zettel notiert. Ebenso einfach könnte er den Standort auch auf ein Sprachspeichersystem wie ein Diktiergerät sprechen. Derartige Systeme mit geringer aber für diesen Zweck zweifellos ausreichender Speicherkapazität werden inzwischen sogar schon als Schlüsselanhänger angeboten. Beide Lösungen scheitern gewöhnlich an der Bequemlichkeit der Kraftfahrzeugbesitzer bzw. ihrer Überzeugung, eines solchen Hilfsmittels nicht zu bedürfen, um Ihr Fahrzeug wiederzufinden - eine Überzeugung, die in vielen Fällen von der Realität widerlegt wird.

Weiterhin sind zahlreiche Verfahren und Vorrichtungen bekannt, um gestohlene oder verunfallte Fahrzeuge oder Wertgegenstände aufzufinden oder aber den Standort von Fahrzeugen einer Fahrzeugflotte beispielsweise einer Spedition festzustellen. Beispiele dafür finden sich in der US-PS 4908629, der DE-OS 19608777, der DE-OS 4403873 und im DE-GBM 29713978. Meist basieren diese Verfahren darauf, daß das Fahrzeug, dessen Standort festgestellt werden soll, über einen Peilsender verfügt, dessen Position mittels Satelliten oder ortsfester oder mobiler Peilempfänger geortet werden kann. Vielfach wird der Peilsender auch erst durch ein Funksignal einer Leitstelle oder ein besonderes Ereignis (Auslösen des Airbags bei einem Unfall, Überwinden des Diebstahlschutzes bei einem Diebstahl etc.) aktiviert. Zwar wären derartige Verfahren und Vorrichtungen theoretisch auch zum Auffinden eines geparkten Fahrzeugs einsetzbar, doch gehen alle diese Verfahren davon aus, daß sich das Fahrzeug mittels Funkwellen erreichen läßt. Bei einem Fahrzeug, das im Freien in Bewegung ist, wird dies in der Regel häufig der Fall sein - und wenn nicht sofort dann einige Minuten später. Ein geparktes Fahrzeug dagegen kann an beliebiger, gegebenenfalls sehr ungünstiger Stelle geparkt sein und wird diesen ungünstigen Standort auch nicht verlassen. Schon am Rande einer engen Straße mit hoher seitlicher Bebauung, wie sie Innenstädten durchaus üblich ist, wird die Verbindung zu Satelliten schwierig bis unmöglich. Auch gibt es gerade in Innenstädten und in bergigen Gebieten zahlreiche "Funklöcher", in denen keine Funkverbindung mit dem Fahrzeug möglich ist. Schließlich kann das Fahrzeug auch in einem Gebäude wie einem Parkhaus geparkt sein. Gerade Stahlbetonbauten wirken aber als Faradayscher Käfig und schirmen elektromagnetische Wellen zuverlässig ab. Das gilt in noch stärkerem Maße auch für Tiefgaragen und unterirdische Parkräume.

Abgesehen von diesen technischen Unterschieden zum Auffinden gestohlener Fahrzeuge gibt es auch noch einen sehr wesentlichen wirtschaftlichen Unterschied. Ein gestohlenes Fahrzeug stellt einen erheblichen Wert dar und ein Diebstahl ist ein relativ seltenes Ereignis. Entsprechend hoch darf auch der Aufwand sein, es wiederzufinden. So läßt sich beispielsweise auch der recht hohe Aufwand mobiler Peiltrupps rechtfertigen. Ein derartiger Aufwand verbietet sich aber selbstverständlich für die relativ häufig zu lösende Aufgabe des Auffindens eines geparkten Fahrzeugs.

Der Erfindung liegt daher die Aufgabe zugrunde, ein einfaches und preiswertes Hilfsmittel zu schaffen, den Standort eines an beliebig ungünstiger Stelle geparkten Fahrzeugs dem Fahrer jederzeit angeben zu können, damit dieser sein Fahrzeug möglichst schnell wiederfinden kann.

Diese Aufgabe wird erfindungsgemäß durch eine Vorrichtung mit den Merkmalen des Patentanspruchs 1 oder des Patentanspruchs 2 und ein Verfahren mit den Merkmalen des Patentanspruchs 18 gelöst.

Der Grundgedanke der Erfindung besteht also darin, spätestens bei einem Parkvorgang die Information über die aktuelle Position und/oder die gefahrene Strecke aufzuzeichnen und abzuspeichern, damit der Fahrer später, wenn er sein Fahrzeug sucht, einfach auf die gespeicherte Information zurückgreifen kann. Auf diese Art und Weise wird eine zeitliche Entkopplung zwischen dem Speichern der Standort- bzw. Streckeninfomation und dem späteren Zugriff darauf durch den Fahrer erreicht. Dadurch spielt es beim Zugriff auf die Information keine Rolle mehr, ob das Fahrzeug zu diesem Zeitpunkt über Funk erreichbar ist oder nicht. Die Informationsübertragung vom Fahrzeug zum Zwischenspeicher erfolgt in jedem Fall zu einem Zeitpunkt zu dem der Fahrer sich in unmittelbarer Umgebung des Fahrzeugs befindet und somit eine ungestörte Informationsübertragung möglich ist.

Ein weiterer wesentlicher Vorteil der erfindungsgemäßen Vorrichtung besteht darin, daß diese den Standort des geparkten Fahrzeugs automatisch und unbemerkt vom Fahrer aufzeichnet, so daß dieser weder in seiner Bequemlichkeit beeinträchtigt wird, noch durch eine Selbstüberschätzung des Fahrers eine Aufzeichnung unterbleibt.

Ein zusätzlicher Vorteil der erfindungsgemäßen Vorrichtung ist darin zu sehen, daß sie sich zumindest teilweise sehr einfach in elektronische Geräte, die der Fahrer sowieso mit sich führt, wie Mobiltelefone, Pager, elektronische Organizer oder tragbare Computer integrieren läßt.

Vorteilhafte Ausgestaltungen und Weiterbildungen der Erfindung und deren Vorteile sind in den Unteransprüchen bzw. der weiteren Beschreibung dargestellt.

Ausführungsbeispiele der Erfindung werden im folgenden anhand der Zeichnungen dargestellt. Dabei zeigt:
- Fig. 1: ein Blockschaltbild der erfindungsgemäßen Vorrichtung.
- Fig. 2: ein Blockschaltbild einer möglichen Ausgestaltung des mobilen Terminals
- Fig. 3: ein Blockschaltbild einer weiteren Ausgestaltung der erfindungsgemäßen Vorrichtung
- Fig. 4: ein Blockschaltbild einer Erweiterung des im Fahrzeug befindlichen Teils der erfindungsgemäßen Vorrichtung

In den Blockschaltbildern der Figuren ist die hauptsächliche Richtung des Informationsflusses durch Pfeile angedeutet. Dies soll aber nicht ausschließen, daß auch vorzugsweise Steuer- und Kontrollinformationen in entgegengesetzter Richtung übertragen werden

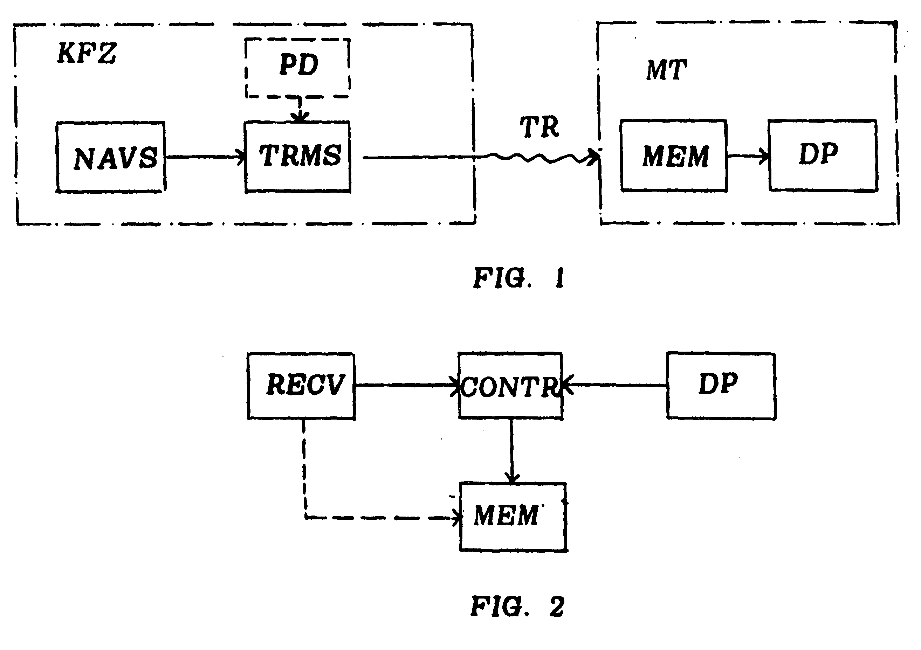

In Fig. 1 ist eine Blockschaltbild einer Ausgestaltung des erfindungsgemäßen Vorrichtung dargestellt. Das Fahrzeug KFZ, das geparkt und später wiedergefunden werden soll, enthält ein Navigationssystem NAVS. Schon heute sind viele Fahrzeuge KFZ vor allem der gehobenen Klassen mit elektronischen Navigationssystemen NAVS ausgestattet. Mit zunehmendem Preisverfall der Navigationssysteme steigt ihr Verbreitungsgrad und man kann bereits absehen, daß schon in wenigen Jahren ein elektronisches Navigationssystem NAVS ebenso wie ein Radio zur Standardausstattung eines Kraftfahrzeuges KFZ zählen wird. Den Systemen liegt dabei in der Regel eine digitalisierte Straßenkarte enthalten in einem Festwertspeicher oder auf CD-ROM zugrunde. Die einfachsten Systeme verfügen nur über Sensoren an den Rädern, mit denen die Umdrehung der Räder gemessen wird (derartige Sensoren sind für Anti-Blockiersysteme, z.B. das sogenannte ABS-System, in der Regel bereits vorhanden) und/oder einen elektronischen Kompaß (Magnetfeldsensor, Kreiselkompaß oder Gyroskop). Mit Hilfe dieser Sensoren können sie Richtung und gefahrene Wegstrecke ermitteln und dann mittels Koppelnavigation ausgehend von einem vom Fahrer einzugebenden bekannten Startpunkt die aktuelle Position des Fahrzeuges ermitteln. Mit zunehmender Wegstrecke wird allerdings die Koppelnavigation immer ungenauer, da sich geringe Meßfehler immer stärker auswirken.

Daher benutzen die meisten modernen Fahrzeugnavigationssysteme eine grobe Standortbestimmung mit Hilfe von speziellen Satelliten, die ihre aktuelle Position abstrahlen. Aus der Laufzeit der Funksignale vom Satelliten zum Fahrzeug kann man, indem man die Signale mehrerer Satelliten empfängt recht genau die Position des Empfängers bestimmen. Das bekannteste derartige System ist das sogenannte GPS-System (GPS = Global Positioning System), das allerdings aus militärischen Gründen künstlich in seiner Genauigkeit verschlechtet wird und so nur eine Standortbestimmung mit einer Genauigkeit von etwa 30 m zuläßt. Aus diesem Grunde benutzen moderne Kraftfahrzeugnavigationssysteme zusätzlich eine Koppelnavigation ausgehend von den Informationen der elektronischen Straßenkarte, indem z.B. markante Streckenpunkte wie beispielsweise eine Kreuzung, an der abgebogen wird, in die Auswertung mit einbezogen werden. Dies hilft auch, zeitweilige Abschattungen eines oder mehrerer Satelliten durch Hindernisse wie Gebäude zu überbrücken. Die genaue Funktionsweise derartiger Systeme ist beispielsweise in dem Artikel "Die nächste links, bitte" von Peter Röbke-Doerr erschienen in der Zeitschrift c't (Heft 13/97 Seite 230 ff) sowie in der EP-PS 566391 beschrieben und dem Fachmann bekannt. Solche Navigationssysteme können den Standort eines Fahrzeuges auch nach längerer Wegstrecke auf wenige Meter genau bestimmen. In Zukunft werden die satellitengestützten Navigationssysteme zusätzlich noch durch im Rahmen von modernen Verkehrsleitsystemen sowieso erforderliche Funkbaken am Straßenrand oder an Brücken, Verkehrssignalanlagen, Lichtmasten, Parkuhren etc. zusätzliche und sehr genaue Standortinformationen erhalten können.

Bei zukünftige Systemen wird die maschinenlesbare Straßenkarte nicht unbedingt im Fahrzeug KFZ enthalten sein. Es genügt, wenn das Navigationssystem beispielsweise über eine Funkverbindung Zugriff darauf hat. Dies ist schon heute mit Hilfe einer Internet-Verbindung über ein angeschlossenes Mobiltelefon möglich.

Bei allen diesen Systemen liegt also auch die Information, wo ein Fahrzeug geparkt wird, bereits im Navigationssystem NAVS im Fahrzeug KFZ vor. Der wesentliche Grundgedanke der hier beschriebenen Erfindung besteht nun darin, mit Hilfe einer Zusatzvorrichtung zum Navigationssystem, die Information über die Position des geparkten Fahrzeugs KFZ zu einem mobilen Terminal MT, das der Fahrer, wenn er das Fahrzeug verläßt, mit sich führt, zu übertragen. Im mobilen Terminal MT wird diese Information gespeichert und steht dem Fahrer jederzeit zum Abruf bereit. Die Übermittlung der Positionsinformation kann dabei entweder ständig erfolgen, mindestens solange sich das Fahrzeug KFZ in Bewegung befindet, oder aber wenigstens einmal, sobald das Fahrzeug geparkt wird.

Zu diesem Zweck wird das Navigationssystem NAVS mit einer Datenübertragungseinrichtung TRSM verbunden, die die aktuelle Positionsinformation vom Navigationssystem NAVS erhalten kann und dann über die Übertragungsstrecke TR zum mobilen Terminal MT sendet. Die Übertragungsstrecke TR ist dabei sehr kurz und auf das Fahrzeug selbst und/oder dessen unmittelbare Umgebung beschränkt.

Die Erkennung, ob das Fahrzeug geparkt wird, kann mit Hilfe einer Parkerkennungsschaltung PD erfolgen, die mit der Datenübertragungseinrichtung TRSM verbunden ist und über diese Verbindung an die Datenübertragungseinrichtung TRSM meldet, ob ein Indiz dafür vorliegt, daß das Fahrzeug geparkt wird bzw. geparkt worden ist. Im Falle der ständigen Übermittlung der Positionsinformation an das mobile Terminal MT kann die Parkerkennungsschaltung PD dagegen ersatzlos entfallen.

Bei einer ständigen Übertragung der Positionsinformation ist es zwar prinzipiell beliebig, wie oft die Übertragung der Positionsinformation vom Navigationssystem NAVS über die Datenübertragungseinrichtung TRSM zum mobilen Terminal MT erfolgt, unterliegt aber doch gewissen Restriktionen. Sie muß zumindest hinreichend oft erfolgen, damit Änderungen des Standorts des Fahrzeugs KFZ an das mobile Terminal übermittelt werden. Insbesondere sollte bei einem signifikante Wechsel der Position des Fahrzeugs eine Übertragung der neuen Position an das mobile Terminal MT erfolgen. Dies kann dadurch geschehen, daß in festgelegten aber nicht unbedingt äquidistanten zeitlichen Intervallen, unabhängig von der Bewegung des Fahrzeugs eine Übertragung erfolgt (beispielsweise alle 10 Sekunden). Hat sich in dieser Zeit das Fahrzeug nicht bewegt, so wird eben erneut die gleiche Positionsinformation zum mobilen Terminal MT übertragen. In jedem Fall enthält das mobile Terminal MT auf diese Weise immer die Information über den aktuellen Standort des Fahrzeugs. Die Häufigkeit der Übertragung des Standorts zum mobilen Terminal kann sich aber auch an der gefahrenen Wegstrecke orientieren (beispielsweise eine Übertragung pro 20 m Wegstrecke).

Wie lange insgesamt die Aussendung erfolgt, ist ebenfalls beliebig. Sie braucht nur solange zu erfolgen, wie sich das Fahrzeug in Bewegung befindet. Wird es geparkt und z.B. die Zündung abgestellt, ist eine weitere Übertragung nicht mehr nötig. Sie kann dennoch weiterhin erfolgen (es wird dann eben wieder die bereits gespeicherte Positionsinformation gesendet). Die Übertragung bricht in diesem Falle ab, sobald der Fahrer das Fahrzeug bzw. dessen unmittelbare Umgebung und damit die maximale Reichweite der Übertragungsstrecke TR verläßt.

Bei der zweiten zuvor dargestellten Möglichkeit wird dagegen die Positionsinformation des Fahrzeugs KFZ nur dann wenigstens einmal zum mobilen Terminal übermittelt, wenn ein Indiz dafür vorliegt, daß das Fahrzeug geparkt wird oder geparkt worden ist. Die Auswertung bzw. Erkennung, daß ein solches Indiz für einen Parkvorgang vorliegt, übernimmt die Parkerkennungsschaltung PD. Als Indizien für einen Parkvorgang kommen eine ganze Reihe verschiedener Bedingungen in Frage, die einzeln oder gemeinsam erfüllt sein können oder müssen. Beispiele dafür sind das Absinken der Fahrzeuggeschwindigkeit unter einen niedrigen Schwellwert (z.B. 5 km/h), der Stillstand des Fahrzeugs, ein Ausschalten der Zündung, das Abziehen des Zündschlüssels, eine Parkstellung des Automatikgetriebes, das Anziehen der Handbremse, das Öffnen der Fahrertür, das Entnehmen der Diebstahlschutz-Chipkarte aus dem Autoradio bzw. das Abnehmen des Autoradio-Displays als Diebstahlschutz, das Einrasten des Lenkradschlosses, das Schließen der Zentralverriegelung, das Lösen des Sicherheitsgurts, das Scharfschalten der Autoalarmanlage, das Entfernen des Fahrers vom Fahrzeug usw. Die Parkerkennungsschaltung PD überwacht also die der jeweiligen Bedingung zugeordnete physikalische Größe, wie z.B. die Geschwindigkeit des Fahrzeugs, und meldet das Eintreten gerade der gewählten Bedingung als Indiz für einen eingeleiteten, durchgeführten oder abgeschlossenen Parkvorgang.

Das Indiz für einen Parkvorgang muß dabei keineswegs eine hinreichende Bedingung für ein Parken des Fahrzeugs sein, es genügt vollkommen, wenn es sich um eine in aller Regel notwendige Bedingung handelt. Wählt man beispielsweise einen wenigstens 10 Sekunden dauernden Stillstand des Fahrzeugs als Indiz für einen Parkvorgang, so handelt es sich dabei zweifelsohne um eine notwendige Bedingung, die aber keineswegs hinreichend ist, denn auch der Stopp an einer roten Ampel oder einer Kreuzung erfüllt die gleiche Bedingung. Bei dieser Bedingung überwacht also die Parkerkennungsschaltung PD die physikalischen Größen gefahrene Wegstrecke oder Geschwindigkeit des Fahrzeugs und Zeit. Die Parkerkennungsschaltung PD könnte in diesem Fall einfach aus einem retriggerbaren Monoflop mit einer Zeitkonstante von 10 Sekunden bestehen, wobei jede Bewegung etwa dargestellt durch die Impulse an den Tachometer eine Triggerung des Monoflops bewirkt. Erst beim Stillstand des Fahrzeugs und damit verbundenen Ausbleiben der Tachoimpulse für mindestens 10 Sekunden kann das Monoflop in den Grundzustand zurückkehren, was dann als Vorliegen eines Indizes für einen Parkvorgang an die Datenübertragungseinrichtung TRSM gemeldet werden kann. Weitere mögliche Realisierungen solcher Parkerkennungsschaltungen PD sind dem Fachmann bekannt.

Eine Fehlerkennung eines Parkvorgangs durch die Parkerkennungsschaltung PD - beispielsweise ein Stopp an einer Ampel statt zum Parken - ist nicht weiter tragisch. In diesem Fall wird eben die Positionsinformation des Fahrzeugs beim zwischenzeitlichen Stopp zum mobilen Terminal übertragen und dort gespeichert. Spätestens beim nächsten Stopp, also insbesondere bei dem zum Parken, wird die neue Positionsinformation zum mobilen Terminal MT übertragen und überschreibt dort die zuvor fehlerhaft gespeicherte. Das Indiz für einen Parkvorgang muß allerdings so gewählt werden, daß sich der Fahrer und mit ihm das mobile Terminal MT noch innerhalb der Reichweite der Übertragungsstrecke TR befinden, wenn die Aussendung der Positionsinformation durch die Datenübertragungseinrichtung TRSM erfolgt. Unter diesem Gesichtspunkt wäre also die Wahl eines mehrminütigen Stillstand des Fahrzeugs als Indiz für einen Parkvorgang wenig zweckmäßig, obwohl die Bedingung selbst notwenig und mit hoher Wahrscheinlichkeit auch hinreichend für einen Parkvorgang ist.

Das mobile Terminal MT muß wenigstens zeitweise mindestens eine Speichereinheit MEM sowie eine Darstellungseinheit DP enthalten. Die über die Übertragungsstrecke TR von der Übertragungseinrichtung TRSM übertragene Positionsinformation wird in der Speichereinheit MEM abgespeichert und kann bei Bedarf über die Darstellungseinheit DP aus dem Speicher ausgelesen und in einer für den Fahrer wahrnehmbaren Weise dargestellt werden.

Eine bevorzugten Ausgestaltung des mobilen Terminals MT ist in Fig. 2 dargestellt. Das mobile Terminal der Erfindung besteht aus einer Datenempfangseinrichtung RECV, die die von der Datenübertragungseinrichtung TRSM über die Übertragungsstrecke TR gesendeten Positionsdaten empfängt und gegebenenfalls demoduliert und dekodiert, einer Steuereinheit CONTR, der Speichereinheit MEM und einer Darstellungseinheit DP, die als Interface zum Menschen fungiert und dem Fahrer den Standort des Fahrzeugs angibt. Die in der Regel ebenfalls erforderliche Stromversorgung - etwa durch Batterien - ist zur Vereinfachung in der Zeichnung nicht dargestellt. Allerdings muß die Stromversorgung auch nicht unbedingt dauerhaft Bestandteil des mobilen Terminals sein. Ebenso ist möglich, daß die Stromversorgung nur zeitweise mit dem mobilen Terminal MT verbunden ist. Ein Ausgang der Datenübertragungseinrichtung TRSM ist mit einem Eingang der Steuereinheit CONTR verbunden und liefert über diesen das empfangene und gegebenenfalls demodulierte Signal zur weiteren Auswertung an die Steuereinheit CONTR. Die Steuereinheit CONTR gewinnt dann aus dem empfangenen Signal wieder die Positionsinformation des Fahrzeugs KFZ. Die Steuereinheit CONTR ist mit der Speichereinheit MEM verbunden und kann über diese Verbindung lesend und schreibend auf die Speichereinheit MEM zugreifen. Außerdem ist die Steuereinheit CONTR mit der Darstellungseinheit DP verbunden. Über diese Verbindung kann die Steuereinheit CONTR die gespeicherte Information über den letzten gesendeten Standort des Fahrzeugs mit Hilfe der Darstellungseinheit DP darstellen bzw. dem Fahrer wiedergeben. Die Darstellungseinheit DP kann auch über eine Eingabeeinheit, etwa Tasten, verfügen, über die der Fahrer den Wunsch anzeigt, die Standortinformation zu erhalten und damit die Darstellung der Standortinformation initiert. In diesem Fall meldet die Darstellungseinheit DP den entsprechenden Wunsch des Fahrers an die Steuereinheit CONTR, die daraufhin die gespeicherte Information über den Standort des Fahrzeuges KFZ aus der Speichereinheit MEM ausliest und zur Übermittlung an den Fahrer an die Darstellungseinheit DP übergibt.

Was genau als Positionsinformation übertragen wird, hängt vom Navigationssystem und insbesondere falls vorhanden von der Qualität und Auflösung der dem Navigationssystem NAVS zugrunde liegenden elektronischen Straßenkarte ab. Die Positionsinformation sollte bei Vorliegen einer elektronischen Straßenkarte in jedem Fall den Namen der Straße, in der sich das Fahrzeug befindet, und zumindest bei längeren Straßen auch den bzw. die Namen der nächsten Querstraße bzw. Querstraßen enthalten. Alternativ zu den Querstraßen wäre bei längeren Straßen auch die Angabe der ungefähren Hausnummer sinnvoll (gedruckte Straßenkarte enthalten oftmals die Hausnummern an den Kreuzungen, dazwischen wäre eine Interpolation möglich). Was ansonsten noch übertragen wird (etwa die Namen und Positionen der Straßen in der näheren Umgebung), hängt im wesentlichen von den Möglichkeiten der Darstellungseinheit DP ab.

Alternativ dazu kann die Positionsinformation auch nur die Koordinaten des Standortes enthalten. In der Regel wird allerdings die Darstellung der reinen Koordinaten für den Fahrer wenig hilfreich sein. Falls das mobile Terminal allerdings selbst Zugriff auf eine digitale Straßenkarte besitzt, beispielsweise weil diese in der Speichereinheit abgelegt ist, so kann die Steuereinheit CONTR die in der Speichereinheit MEM gespeicherten Koordinaten als Positionsinformation auslesen, diesen mit Hilfe des Zugriffs auf die Straßenkarte Straßen zuordnen und diese dann als Namen oder graphisch auf der Darstellungseinheit DP darstellen.

Ebenso genügen die Standortkoordinaten als Positionsinformation, wenn das mobile Terminal MT selbst ein Standortbestimmungssystem, z.B. einen kleinen GPS-Empfänger, enthält. Das mobile Terminal MT kann dann wenigstens im Freien Entfernung und Richtung von der Position des Fahrers zum geparkten Fahrzeug errechnen und anzeigen und so den Fahrer zusätzlich bei der Suche unterstützen.

Die Übertragung zwischen Datenübertragungseinrichtung TRSM und Datenempfangseinrichtung RECV kann auf beliebige Art und Weise sowohl drahtlos als auch drahtgebunden erfolgen. Eine drahtgebundene Übertragung bietet sich z.B. an, wenn man das mobile Terminal als Bestandteil des Zündschlüssels ausführt. Den Zündschlüssel wird der Fahrer in jedem Fall mit sich führen, wenn er das Fahrzeug verläßt. Die Übertragung kann dann mit Hilfe elektrischer Kontakte am Zündschlüssel erfolgen. Diese stellen dann einen Teil der Datenempfangseinrichtung RECV dar.

Eine drahtlose Übertragung der Positionsinformation kann z.B. mit Hilfe von Infrarot-Licht, Schall- bzw. Ultraschallwellen, elektrischen oder magnetischen oder elektromagnetischen Feldern oder Wellen erfolgen. Entsprechende Übertragungssysteme sowie Möglichkeiten zur Kodierung und Modulation der zu übertragenden Informationen sowie zur Demodulation und Dekodierung sind seit langem Stand der Technik und dem Fachmann bekannt.

In Deutschland bietet sich beispielsweise eine Funkübertragung bei 433 MHz an. Auch drahtlose Türverriegelungssysteme für Kraftfahrzeuge arbeiten in diesem Frequenzbereich. Wegen der geringen zulässigen Sendeleistung von maximal 10 mW ist die Reichweite der Funkübertragung auf das Fahrzeug selbst sowie wenige Meter um das Fahrzeug herum beschränkt.

Die Steuereinheit CONTR und die Speichereinheit MEM können in Form eines Mikrokontrollers realisiert werden. Entsprechende Möglichkeiten sind dem Fachmann bekannt. Die Darstellungseinheit DP kann eine akustische oder optische Darstellung der Positionsinformation ermöglichen.

Nach einer bevorzugten Ausgestaltung der erfindungsgemäßen Vorrichtung wird das mobile Terminal MT als Schlüsselanhänger zum Zündschlüssel realisiert. Dadurch ist sichergestellt, daß der Fahrer tatsächlich das mobile Terminal MT mit sich führt, wenn er das Fahrzeug verläßt. Da verschiedene Navigationssysteme, um den Fahrer nicht beim Fahren abzulenken, mit einer Sprachausgabe arbeiten, bietet es sich an, diese auch für die erfindungsgemäße Vorrichtung zu benutzen. Die Positionsinformation kann dann beispielsweise in Form des Namens der Straße, in der sich das Fahrzeug befindet, sowie der geschätzten Hausnummer oder der nächsten Querstraße in Sprachform übertragen werden. Falls die Straßennamen nicht schon in digitalisierter Form als Sprachdatei in der elektronischen Straßenkarte vorliegen, kann man sich auch inzwischen recht effektiver Algorithmen zur Umsetzung eines als Text vorliegenden Namens in Sprachform bedienen. Derartige Algorithmen werden beispielsweise in dem Programm "ViaVoice" der Firma IBM zum Vorlesen von Texten verwendet.

Die Übertragung der Positionsinformation in Sprachform zum Schlüsselanhänger als mobiles Terminal MT erfolgt mittels Infrarot-Licht oder per Funk. Steuereinheit CONTR und Speichereinheit MEM können dann einfach als Sprachspeichersystem, wie es z.B. in elektronischen Anrufbeantwortern Verwendung findet, realisiert werden. Dafür kommt beispielsweise der Sprachspeicher-IC ISD1416 der Firma ISD (Information Storage Device; erhältlich unter der Bestell- Nr. 16 49 84 von der Firma Conrad electronic, Hirschau, Deutschland) in Betracht. Die Darstellungseinheit DP besteht in diesem Fall einfach aus einem Lautsprecher gegebenenfalls mit vorgeschaltetem Niederfrequenzverstärker sowie einer Taste, mit der der Fahrer die Sprachausgabe der Positionsinformation veranlassen kann.

Nach einer weiteren Ausgestaltung der erfindungsgemäßen Vorrichtung wird das mobile Terminal MT ebenfalls als Schlüsselanhänger zum Zündschlüssel realisiert. Diesmal erfolgt die Übertragung der Positionsinformation aber in Textform. Zur Darstellung dieser Information dient als Darstellungseinheit DP eine optische Anzeige wie z.B. ein ein- oder mehrzeiliges alphanumerisches LCD-Display. Steuer- (CONTR) und Speichereinheit (MEM) werden als Mikrokontroller realisiert. Die Anzeige des Fahrzeugstandorts kann ständig erfolgen. Setzt man als Darstellungseinheit ein grafikfähiges Display ein, so kann man die Position des Fahrzeugs auch in Form einer einfachen Straßenkarte mit den Umgebungsstraßen um den Standort herum angeben. Die Übertragung dieser Infomation kann als Bitmap-Datei oder in entsprechend kodierter Form als Vektordaten erfolgen, wobei dann die Steuereinheit CONTR daraus ein Bitmap generiert.

Nach einer vorteilhaften Weiterbildung der erfindungsgemäßen Vorrichtung wird das mobile Terminal MT nicht als eigenständiges Gerät realisiert sondern in ein anderes elektronisches Gerät, das der Fahrer sowieso mit sich führt, integriert. Hierfür kommen zahlreiche elektronische Hilfsmittel und/oder mehr oder weniger sinnvolle elektronische Spielereien in Frage. Als Beispiele wären zu nennen: Mobiltelefone, Pager (Funkrufempfänger), elektronische Armbanduhren, elektronische Notizbücher (sogenannte Organizer) und mobile Rechner (Palmtops, PDAs = Personal Digital Assistants oder sogenannte Notebooks). Diese Geräte verfügen in der Regel bereits über einen Mikroprozessor und eine Speichereinheit sowie ein häufig sogar grafikfähiges Display, die als Steuereinheit CONTR, als Speichereinheit MEM sowie als Darstellungseinheit DP des mobilen Terminals mitbenutzt werden können. Beim Mobiltelefon hat man zusätzlich noch eine akustische Ausgabe zur Verfügung. Diese Geräte müßten also im wesentlichen nur um eine einfache Datenempfangseinrichtung RECV und die entsprechende Software erweitert werden.

Beim Pager könnte sogar die Datenempfangseinrichtung RECV entfallen, wenn die Datenübertragungseinrichtung TRSM auf dem Frequenzbereich des Pagers und mit dem Protokoll des Pagers senden würde. Technisch wäre dies einfach möglich, doch stehen dem juristische Hindernisse (unzulässiger Frequenzbereich) entgegen. Bei einem Pager würde es also genügen, die Software des internen Prozessors zu ändern.

Ein weiteres elektronisches Gerät, in das die Bestandteile des mobilen Terminals MT sinnvoll integriert werden können, stellt auch ein Autoradio dar. Zahlreiche Autoradios verfügen nämlich als Diebstahlsschutz über eine abnehmbare Fronteinheit, die der Fahrer abnehmen und mitnehmen muß, wenn er das Fahrzeug verläßt, was die Grundvoraussetzung für eine Integration des mobilen Terminals ist. Die Fronteinheit verfügt in der Regel außerdem schon über ein LCD-Display zur Anzeige der Radiodaten, das sich natürlich genauso gut auch als Darstellungseinheit DP des mobilen Terminals MT eignet.

Bei einer anderen Ausgestaltung der erfindungsgemäßen Vorrichtung verfügt die Datenempfangseinrichtung RECV über eine direkte Verbindung zur Speichereinheit (in der Zeichnung gestrichelt dargestellt), über die die Datenempfangseinrichtung RECV die Positionsinformation direkt und unter Umgehung der Steuereinheit CONTR zur Speicherung in der Speichereinheit MEM übertragen kann. Eventuell erforderliche Steuerinformationen könnten in diesem Fall von der Datenübertragungseinrichtung TRSM geliefert werden.

Bei einer weiteren bevorzugten Weiterbildung der erfindungsgemäßen Vorrichtung besteht das mobile Terminal nicht aus einem einzigen Gerät sondern aus mehreren unabhängigen Teilen wobei zumindest zeitweise eine drahtlose und/oder galvanische Verbindung zwischen den Teilen des mobilen Terminals besteht. Eine solche Aufteilung bietet sich z.B. bei Navigationssystemen an, die zusätzlich über eine Chipkarte als Diebstahlsschutz für das Navigationssystem bzw. Autoradio verfügen (z.B. beim Travel-Pilot-Navigationssystem der Firma Blaupunkt, Hildesheim, Deutschland). In einem solchen Fall kann das mobile Terminal MT aus der Chipkarte und einem vorteilhafterweise als Schlüsselanhänger ausgebildeten Lesegerät für die Chipkarte bestehen. Bei dieser Lösung ist ebenfalls sichergestellt, daß der Fahrer beide Teile des mobilen Terminals mit sich führt, wenn er das Fahrzeug verläßt, da er die Chipkarte als Diebstahlschutz mitnehmen muß und den Schlüsselanhänger mit dem Zündschlüssel daran in jedem Fall benötigt.

Bei dieser speziellen Ausgestaltung der erfindungsgemäßen Vorrichtung befindet sich die Speichereinheit MEM z.B. realisiert als EEPROM oder Flash-Speicher als Bestandteil des Chips auf der Chipkarte. Eventuell gilt dies auch für die gesamte oder Teile der Steuereinheit CONTR, doch kann diese auch Bestandteil des Lesegerätes sein. Ebenfalls kann hier die zuvor bereits erwähnte mögliche direkte Verbindung zwischen Datenempfangseinrichtung RECV und Speichereinheit MEM sinnvoll angewandt werden. Das Lesegerät enthält insbesondere die Darstellungseinheit DP vorzugsweise als optisches Display ausgeführt, sowie gegebenfalls Teile der Steuereinheit CONTR oder auch die gesamte Steuereinheit CONTR. Als Datenemfangseinrichtung RECV fungieren die Kontakte der Chipkarte sowie eventuell erforderliche Pegelwandler und Dekodiereinrichtungen. Falls es sich um eine kontaktlose Chipkarte mit Magnetfeldübertragung handelt, zählt natürlich auch die Empfangsspule und der daran angeschlossene Empfänger dazu. Während der Fahrt befindet sich die Chipkarte in einem Aufnahmeschacht des Autoradios bzw. Navigationssystems. Die Datenübertragungseinrichtung TRSM, die mit dem Navigationssystem NAVS verbunden ist, überträgt vorzugsweise über die Kontakte der Chipkarte die Positionsinformation an die Chipkarte, wo sie in der Speichereinheit MEM abgelegt wird. Parkt und verläßt der Fahrer das Fahrzeug, so entnimmt er die Chipkarte dem Aufnahmeschacht. Die Speichereinheit MEM der Chipkarte enthält dann die Positionsdaten des Standorts des geparkten Fahrzeug. Will der Fahrer zu einem späteren Zeitpunkt diesen Standort wissen, so führt er die Chipkarte einfach in das Lesegerät ein.

Dort wird wieder vorzugsweise über die Kontakte der Chipkarte die Positionsinformation zu der auf dem Lesegerät befindlichen Darstellungseinheit DP, also z.B. dem dort befindlichen LCD-Display, übertragen und auf dieser dargestellt. Das Auslesen bzw. Übertragen der Positionsinformation übernimmt wieder die Steuereinheit CONTR, die sich dabei entweder auf der Chipkarte selbst oder aber auf dem Lesegerät oder aber zum Teil auf der Chipkarte zum anderen Teil auf dem Lesegerät befinden kann.

In der bisherigen Beschreibung, wurde die erfindungsgemäße Vorrichtung und insbesondere das mobile Terminal MT mit der Speichereinheit MEM immer als elektronisches System dargestellt. Es soll aber durchaus im Rahmen Erfindung liegen, daß die Vorrichtung zumindest teilweise auch nicht elektronisch z.B. als optisches System realisiert wird. Eine derartige Ausgestaltung der Erfindung besteht beispielsweise darin, als mobiles Terminal MT eine bedruckbare Chipkarte zu verwenden, die auch zugleich als Diebstahlschutz für das Autoradio dienen kann. Die Speichereinheit MEM wird bei dieser Ausgestaltung durch die bedruckbare Oberfläche der Chipkarte dargestellt. Die Übertragungseinrichtung TRSM besteht dann aus einer im Autoradio über oder unter der Chipkartenhalterung angebrachten Druck- und Löscheinheit. Als Löscheinheit genügt z.B. ein magnetischer Löschkopf oder eine mit Lösungsmittel getränkte Schwammrolle, die die Oberfläche der Chipkarte beim Einschieben in die Chipkartenhalterung reinigt - anders ausgedrückt die Speichereinheit MEM löscht. Wird das Fahrzeug KFZ geparkt und die Chipkarte entnommen, so druckt die Druckeinheit (z.B. ein kleiner kleiner Tintenstrahl- oder Thermodruckkopf) beim Entnehmen der Karte - das Entnehmen der Karte ist also zugleich das Indiz für einen Parkvorgang - die Standortinformation wie z.B. den Straßennamen oder eine Umgebungskarte für den Fahrer lesbar auf die Oberfläche der Chipkarte. Darstellungseinheit DP und Speichereinheit MEM sind also in diesem Fall identisch und werden durch die Oberfläche der Chipkarte gebildet, denn die Positionsinformation wird gleich in einer für den Fahrer les- und damit wahrnehmbaren Form gespeichert. Die Übertragungsstrecke TR entspricht bei einem Tintenstrahldrucker der Flugstrecke der Tintentropfen, bei einem Magnetdruckkopf dem erzeugten Magnetfeld und bei einem Thermodruckkopf dem erzeugten Wärmefeld an der Oberfläche der Chipkarte.

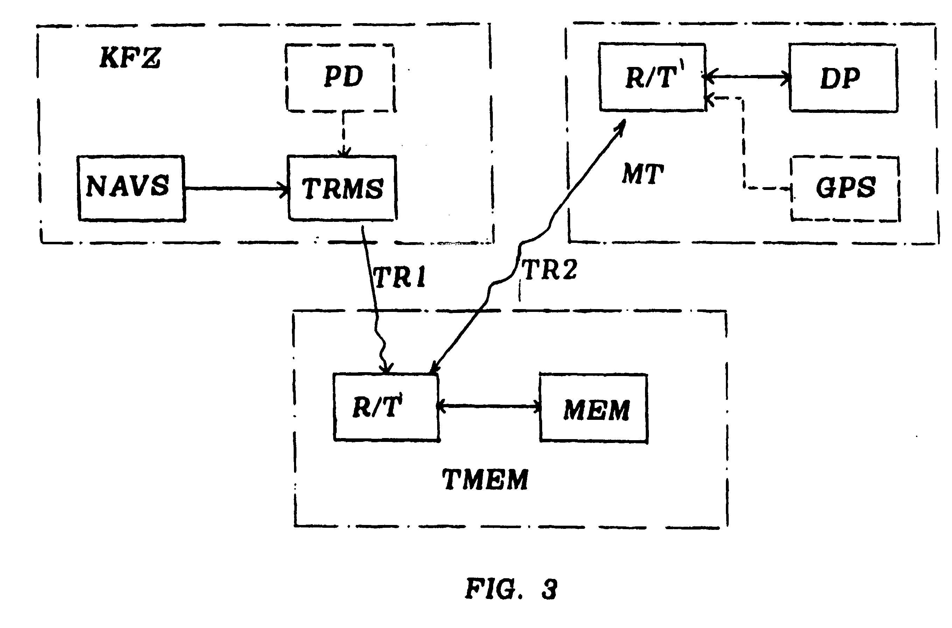

Bei einer anderen in Fig. 3 dargestellten Ausgestaltung der Erfindung bleibt der im Fahrzeug befindliche Teil der Vorrichtung prinzipiell gleich, doch befindet sich die Speichereinheit MEM, in der die Positionsinformation des Fahrzeugs KFZ abgelegt wird, nicht im mobilen Terminal MT sondern in einem Zwischenspeicher TMEM, der außerhalb des Fahrzeugs untergebracht ist. Von dort kann der Fahrer bei Bedarf die Positionsinformation über sein mobiles Terminal MT abrufen und auf dessen Darstellungseinheit DP darstellen. Der Zwischenspeicher TMEM enthält zusätzlich eine Sende-/Empfangseinheit R/T, die die von der Datenübertragungseinrichtung TRMS über eine erste Übertragungsstrecke TR1 gesendete Positionsinformation des Fahrzeugs KFZ empfangen und gegebenenfalls demodulieren und dekodieren kann und mit der Speichereinheit MEM verbunden ist. Nach dem Empfang der Positionsinformation über die erste Übertragungsstrecke TR1 durch die Sende-/Empfangseinheit R/T wird die Positionsinformation über die Verbindung zwischen Sende-/Empfangseinheit R/T und Speichereinheit MEM an die Speichereinheit MEM weitergeleitet und dort abgespeichert. Mögliche Zwischenspeicher sind z.B. ein Rechner mit Modem oder Netzwerkanschluß (vorzugsweise Internetanschluß und/oder Anschluß an ein Funk- oder Telefonnetz oder ein Anrufbeantworter mit Anschluß an ein Telefonnetz.

Schließlich umfaßt diese Ausgestaltung der Erfindung ebenfalls ein mobiles Terminal MT, das der Fahrer, wenn er sein Fahrzeug verläßt, leicht mit sich führen kann. Vorzugsweise kann das mobile Terminal dazu Bestandteil eines anderen Gerätes, das der Fahrer sowieso mit sich führt, sein. Hier sind in erster Linie ein Mobiltelefon, oder ein elektronischer Notizblock (Palmtop) zu nennen. Das mobile Terminal MT ist in der Lage, vorzugsweise drahtlos über Funk über die zweite Übertragungsstrecke TR2 mit dem Zwischenspeicher TMEM bzw. dessen Sende-/Empfangseinheit R/T Kontakt aufzunehmen. Dazu ist es mit einer weiteren Sende/Empfangseinheit R/T' ausgerüstet. Der Zwischenspeicher TMEM sendet daraufhin die in der Speichereinheit MEM abgelegte Positionsinformation über die zweite Übertragungsstrecke zum zur weiteren Sende-/Empfangseinheit R/T' des mobilen Terminals MT, das diese Information dann auf der im mobilen Terminal MT enthaltenen Darstellungseinheit DP, beispielsweise einem Display, in einer für den Fahrer erfaßbaren Weise darstellen kann. Im Unterschied zu den zuvor dargestellten Ausgestaltungen der Erfindung sind bei dieser Ausgestaltung die erste und zweite Übertragungsstrecke TR1 und TR2 nicht mehr wie zuvor die Übertragungsstrecke TR auf den Fahrzeuginnenraum oder die unmittelbare Umgebung des Fahrzeugs beschränkt sondern können durchaus weite Distanzen überbrücken.

Kann sich der Fahrer also nicht mehr daran erinnern, wo er sein Fahrzeug abgestellt hat, so nimmt er einfach über sein mitgeführtes mobiles Terminal MT Kontakt mit dem Zwischenspeicher TMEM auf und läßt sich von diesem die Information über den Standort seines geparkten Fahrzeugs über die zweite Übertragungsstrecke TR2 übertragen und auf der Darstellungseinheit DP darstellen.

Bei der bevorzugten Ausführungsform der erfindungsgemäßen Vorrichtung handelt es sich bei dem mobilen Terminal MT um ein Mobiltelefon mit Internetanschluß und grafikfähigem Display als Darstellungseinheit DP. Auch die im Fahrzeug enthaltene Datenübertragungseinrichtung TRMS wird durch ein Mobiltelefon mit Internetanschluß gebildet. Der Zwischenspeicher TMEM wird durch einen Rechner im Internet, der als Webserver fungieren kann, realisiert. Die Übertragungsstrecken TR1 und TR2 sind dann Funkübertragungsstrecken im jeweiligen Mobilfunknetz, vorzugsweise einem GSM-Netz. Die eigentliche Übertragung kann dabei teilweise wegen der relativ geringen zu übertragenden Datenmenge (dies gilt insbesondere für die Positionsinformation selbst) als Kurzmitteilung via SMS (= Short Message Service) oder als besonders preiswerte Datenübertragung erfolgen. Der Webserver, der als Zwischenspeicher TMEM fungiert, sollte dabei selbst über eine digitalisierte Straßenkarte verfügen, so daß er mit Hilfe der übertragenen und abgespeicherten Positionsinformation des Fahrzeugs KFZ den Namen der Straße sowie auch eine kleine Umgebungskarte um den Fahrzeugstandort ermitteln und zum mobilen Terminal MT senden kann, das diese Angaben dann auf seinem grafikfähigen Display als Darstellungseinheit DP in einer für den Fahrer verständlichen Form anzeigen kann kann.

Bei einer bevorzugten Weiterbildung dieser Vorrichtung enthält das mobile Terminal MT selbst ein Standortbestimmungssystem GPS, beispielsweise einen kleinen GPS-Empfänger, und übermittelt dem Webserver neben der Anfrage nach dem Standort des geparkten Fahrzeugs zugleich die Positionsinformation des Fahrers. Der Webserver ermittelt dann mit Hilfe der gespeicherten Positionsinformation des Fahrzeugs KFZ und der übertragenen Postionsinformation des Fahrers sowie unter Zuhilfenahme des Zugriffs auf die elektronische Straßenkarte die erforderliche Route des Fahrers zu seinem Fahrzeug. Diese Route wird sodann als Karte oder Wegbeschreibung oder auch nur als Richtungsangabe zum mobilen Terminal MT übertragen und dort dem Fahrer angezeigt. Falls der Fahrer manuell seine Position (etwa in Form von Strassenname und Hausnummer) am Mobiltelefon eingibt, kann auch auf den zusätzlichen GPS-Empfänger verzichtet werden und dennoch eine Route vom Standort des Fahrers zum Standort des Fahrzeugs KFZ ermittelt, übertragen und angezeigt werden.

Die in der Zeichnung dargestellten Einheiten müssen nicht unbedingt vollständig getrennt sein, sie können zumindest zeitweise verbunden sein. So wird in einer anderen Weiterbildung der erfindungsgemäßen Vorrichtung das mobile Terminal MT wiederum als Mobiltelefon mit Internetanschluß gebildet. Während der Fahrt und auch während eines Parkvorganges befindet sich das Mobiltelefon in einer Halterung einer Freisprecheinrichtung an Bord des Fahrzeugs KFZ und ist mit dem Navigationssystem NAVS verbunden. Eine solche Verbindung zwischen Navigationssystem und Mobiltelefon ist beispielsweise aus der DE-GBM 9007501 bekannt. Damit kann das Mobiltelefon in dieser Zeit als Teil der Datenübertragungseinrichtung TRMS fungieren. Bei Verlassen des Fahrzeugs KFZ entnimmt der Fahrer das Mobiltelefon der Halterung und trägt es bei sich. In diesem Moment wird das Mobiltelefon zum mobilen Terminal MT.

Das Mobiltelefon kann nach einer vorteilhaften Weiterbildung der erfindungsgemäßen Vorrichtung sogar noch etwas länger eine Doppelrolle spielen. So kann es nämlich sein, daß beim Parkvorgang keine Verbindung zum Mobilfunknetz besteht, weil sich das Fahrzeug gerade in einem "Funkloch" befindet oder aber ein Parkhaus mit Stahlbetonbauteilen eine Art Faradayscher Käfig bildet, wodurch die Wellenausbreitung stark behindert wird. In diesem Fall kann das Mobiltelefon die Positionsinformation des Fahrzeugs kurz zwischenspeichern und dann bei nächster Gelegenheit, d.h. sobald wieder Netzverbindung besteht, zum Zwischenspeicher TMEM übertragen. Die Datenübertragungseinrichtung TRMS ist also hier sogar zweitweise vom Fahrzeug KFZ getrennt.

Bei einer Weiterbildung der Erfindung wird nicht oder nicht nur die Positionsinformation des Fahrzeugs zum mobilen Terminal MT bzw. zum Zwischenspeicher TMEM übertragen sondern auch Informationen über die von einer bekannten Position ab gefahrenen Strecke übertragen. Dies ist z.B. sinnvoll, wenn die dem Navigationssystem zugrundeliegende Karte bestimmte Positionen nicht kennt. Dies kann beispielsweise bei einem großen Parkplatz der Fall sein. Auf der Straßenkarte ist dann zwar meist die Einfahrt zum Parkplatz verzeichnet, aber nicht mehr die Positionen auf dem Parkplatz selbst. Bei einem großen Parkplatz ist dem Fahrer aber kaum damit geholfen nur den Parkplatz selbst wiederzufinden, er will konkret wissen wo sein Fahrzeug steht. Wurde nun aber seine Fahrtstrecke von der letzten bekannten Position an der Parkplatzeinfahrt ab bis zum Parkvorgang aufgezeichnet und abgespeichert, so kann er nun dieser Strecke nachfolgen. Aus den abgespeicherten Informationen über die gefahrene Strecke kann auch einfach die Richtung und Entfernung des Fahrzeugs von der letzten bekannten Position - im dargestellten Beispiel von der Parkplatzeinfahrt - errechnet und dargestellt werden. Auf einem Parkplatz dürfte dies ausreichen, um das Fahrzeug wiederzufinden. Bei dieser Weiterbildung der Erfindung sollte man allerdings die gefahrene Strecke nicht nur zweidimensional sondern dreidimensional aufzeichnen. Gerade in Parkhäusern ist nämlich die dritte Dimension also das Stockwerk, in dem geparkt wurde, besonders wichtig.

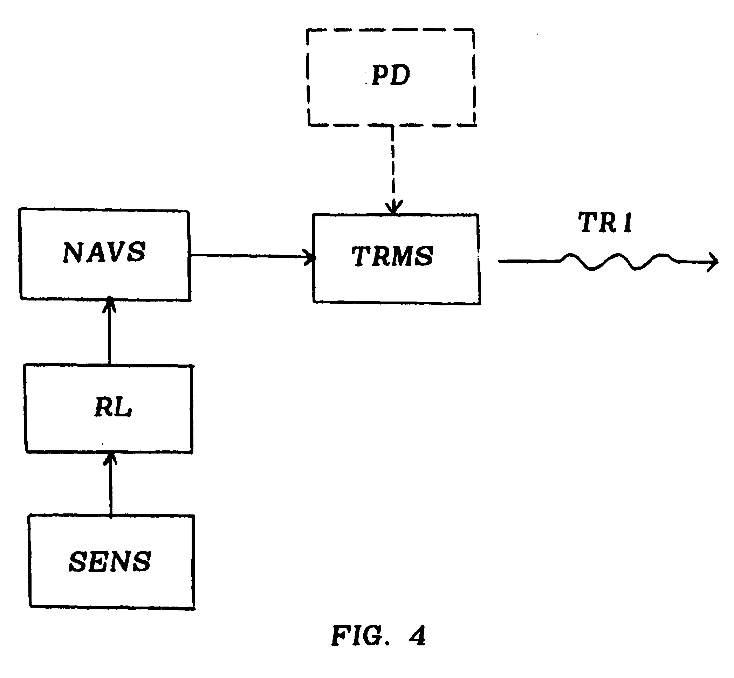

Für diese Weiterbildung der Erfindung, muß das im Fahrzeug befindliche Navigationssystem NAVS erweitert werden. Die dazu erforderliche Anordnung zeigt Fig. 4. Gegenüber den bereits aus Figur 1 und 3 bekannten Vorrichtungen ist eine Streckenaufzeichnungseinheit RL, die die Informationen über die gefahrene Strecke sammelt und aufzeichnet, sowie die zur Erfassung der Strecke erforderlichen Sensoren SENS (in der Zeichnung ist zur Vereinfachung nur ein einziger dargestellt). Dabei können durchaus bereits zu anderen Zwecken im Fahrzeug befindliche Sensoren mitbenutzt werden. Dazu zählen beispielsweise die bereits eingangs erwähnten ABS-Radsensoren oder aber Neigungssensoren, die eigentlich dem Diebstahlschutz dienen, oder Empfänger für den Empfang der Übertragungen von Funkbaken. Diese Sensoren sind mit der Streckenaufzeichnungseinheit RL verbunden und liefern dieser über diese Verbindung ihre Daten der gefahrenen Strecke. Die Streckenaufzeichnungseinheit RL zeichnet diese Informationen kontinuierlich auf und gibt sie bei Bedarf an das Navigationssystem NAVS bzw. die Datenübertragungseinheit TRMS weiter. Die Streckenaufzeichnungseinheit RL kann dabei selbst Bestandteil des Navigationssystems NAVS sein bzw. Teile des Navigationssystems mitbenutzen, denn die von vielen Navigationssystemen durchgeführte Koppelnavigation entspricht in wesentlichen Teilen der Aufgabe der Streckenaufzeichnungseinheit RL. Da während einer Fahrt relativ viele Daten über die Strecke anfallen, können diese schon bei der Aufzeichnung oder bei der Eingabe oder bei der Speicherung auf einige wenige relevante Angaben komprimiert oder reduziert werden. So kann es wie schon zuvor dargestellt schon ausreichen, einige wenige Streckenpunkte nach Entfernung und Richtung vom Ausgangspunkt aus zu kennen.

Obwohl bisher immer davon die Rede war, daß das geparkte Fahrzeug durch seinen Fahrer wiedergefunden werden soll, so kann natürlich auch eine andere Person beispielsweise ein Familienmitglied die erfindungsgemäße Vorrichtung benutzen, um das Fahrzeug aufzufinden. Dies ist besonders dann einfach, wenn diese andere Person über ein zweites mobiles Terminal MT verfügt, das z.B. ebenfalls Verbindung mit dem Zwischenspeicher aufnehmen und von dort die Positionsinformation des Fahrzeugs abrufen kann. Alternativ kann auch das zweite mobile Terminal eine Datenverbindung mit dem mobilen Terminal des Fahrers aufnehmen und aus dessen Speichereinheit die erforderlichen Daten übernehmen. Dies ist besonders einfach, wenn es sich bei den mobilen Terminals um modifizierte Mobiltelefone handelt.

Abgesehen vom Auffinden eines geparkten Fahrzeugs, an dessen Standort sich der Fahrer nicht mehr erinnern kann, gibt es für die erfindungsgemäße Vorrichtung die weitere vorteilhafte Verwendung zur Dokumentation des Parkstandortes im Falle eines Diebstahls des Fahrzeuges. Zahlreiche Versicherungsverträge bei Kraftfahrzeugversicherungen sehen nämlich Klauseln vor, nach denen das Fahrzeug über Nacht in einer Garage oder auf einem bewachten Parkplatz abgestellt sein muß, um eine Prämienreduktion zu erlangen bzw. damit überhaupt ein Versicherungsschutz besteht. Mit der Aufzeichnung des Parkstandortes im mobilen Terminal MT bzw. Zwischenspeicher TMEM läßt sich nun leicht der Nachweis erbringen, wo das Fahrzeug geparkt wurde und damit auch, ob entsprechend den Versicherungsbedingungen oder nicht. Neben der reinen Positionsinformation sollten dazu allerdings zugleich noch weitere Daten wie z.B. Datum und Uhrzeit sowie gegebenenfalls Zustandsdaten des Fahrzeugs (Scheiben geschlossen, Zustand der Alarmanlage etc.) abgespeichert werden. Außerdem sollten diese Daten verschlüsselt abgespeichert werden, damit eine nachträgliche Manipulation durch den Fahrer ausgeschlossen ist.

Werden im mobilen Terminal MT bzw. im Zwischenspeicher TMEM nicht nur die Daten des letzten Parkvorganges sondern auch vorhergehende Parkvorgänge abgespeichert, so kann dies auch die Führung eines Fahrtenbuchs erleichtern. Dazu sollte zu jedem Parkvorgang auch Datum und Uhrzeit sowie die gefahrene Streckenlänge abgespeichert werden. Besonders vorteilhaft ist diese Verwendung, wenn das mobile Terminal wenigstens teilweise als Chipkarte ausgeführt wird, für die dann auch Lesegeräte zum Anschluß an einen Computer zur Verfügung stehen.

Natürlich liegen nicht nur die dargestellten Beispiele für Weiterbildungen und Ausgestaltungen sondern auch deren Kombinationen im Rahmen der Erfindung. Obwohl die erfindungsgemäße Vorrichtung bisher für ein Automobil beschrieben wurde, ist die Erfindung doch so zu verstehen, daß sie in allen Arten von See-, Luft- und Landfahrzeugen, die über ein elektronisches Navigationssystem verfügen eingesetzt werden kann. Wo bisher von Navigationssystem die Rede war, ist dies stets so zu verstehen, daß auch ein einfaches Standortbestimmungssystem - etwa ein simpler GPS-Empfänger ohne Zugriff auf eine elektronische Straßenkarte - als Navigationssystem gelten soll. Im Rahmen dieser Anmeldung werden die Begriffe Positionsinformation und Positionsdaten synonym verwendet.

## Patentansprüche

1. Vorrichtung zum Auffinden eines geparkten Fahrzeugs (KFZ) durch dessen Fahrer
- mit einem wenigstens zeit- und teilweise im Fahrzeug (KFZ) befindlichen Navigationssystem (NAVS), das Positionsdaten des Fahrzeugs und/oder Daten über die gefahrene Stecke ermitteln kann und/oder fortwährend ermittelt,
- mit einem mobilen Terminal (MT), das wenigstens zeitweise vom Fahrzeug (KFZ) unabhängig ist und das der Fahrer mit sich führen kann, wenn er das Fahrzeug (KFZ) verläßt, und das wenigstens zeitweise eine Speichereinheit (MEM) enthält,
- mit einer Datenübertragungseinrichtung (TRSM), die wenigstens zeitweise mit dem Navigationssystem (NAVS) verbunden ist und über diese Verbindung die Positionsdaten des Fahrzeugs und/oder die Daten über die gefahrene Strecke erhalten kann und die über eine Übertragungsstrecke (TR) die Positionsdaten des Fahrzeugs (KFZ) und/oder die Daten über die gefahrene Strecke drahtlos oder drahtgebunden gegebenfalls nach Modulation und Kodierung zum mobilen Terminal MT übermittelt, das diese empfängt und gegebenenfalls komprimiert oder reduziert in seiner Speichereinheit (MEM) abspeichert, wobei sich die Reichweite der Übertragungsstrecke (TR) auf den Fahrzeuginnenraum und/oder die unmittelbare Umgebung des Fahrzeugs (KFZ) beschränkt.
- und mit einer wenigstens zeitweise im mobilen Terminal (MT) enthaltenen oder mit diesem verbundenen Darstellungseinheit (DP), mit deren Hilfe die in der Speichereinheit (MEM) abgespeicherten Positionsdaten des Fahrzeugs (KFZ) und/oder die Daten über die gefahrene Strecke gegebenenfalls nach einer Weiterverarbeitung in einer für den Fahrer erfaßbaren Weise dargestellt werden.

2. Vorrichtung zum Auffinden eines geparkten Fahrzeugs (KFZ) durch dessen Fahrer
- mit einem wenigstens zeit- und teilweise im Fahrzeug (KFZ) befindlichen Navigationssystem (NAVS), das Positionsdaten des Fahrzeugs und/oder Daten über die gefahrene Stecke ermitteln kann und/oder fortwährend ermittelt,
- mit einem außerhalb des Fahrzeugs (KFZ) befindlichen Zwischenspeicher (TMEM), der über eine Speichereinheit (MEM) und eine damit verbundene Sende-/Empfangseinheit (R/T) verfügt,
- mit einer Datenübertragungseinrichtung (TRSM), die wenigstens zeitweise mit dem Navigationssystem (NAVS) verbunden ist und über diese Verbindung die Positionsdaten des Fahrzeugs und/oder die Daten über die gefahrene Strecke erhalten kann und die über eine erste Übertragungsstrecke (TR1) die Positionsdaten des Fahrzeugs (KFZ) und/oder die Daten über die gefahrene Strecke zur Sende-/Empfangseinheit (R/T) des Zwischenspeichers (TMEM) übermittelt, wobei der Zwischenspeicher (TMEM) die so übertragenen Positionsdaten und/oder die Daten über die gefahrene Strecke gegebenenfalls komprimiert und reduziert in seiner Speichereinheit (MEM) abspeichert,
- mit einem mobilen Terminal (MT), das der Fahrer mit sich führen kann, wenn er das Fahrzeug (KFZ) verläßt, und mit einer wenigstens zeitweise darin enthaltenen oder damit verbundenen Darstellungseinheit (DP), wobei das mobile Terminal (MT) das über eine zweite Übertragungsstrecke (TR2) mit dem Zwischenspeicher (TMEM) Verbindung aufnehmen und sich von diesem die in der Speichereinheit (MEM) abgespeicherte Positionsdaten des Fahrzeugs (KFZ) und/oder die Daten über die gefahrene Strecke und/oder mit diesen Daten verbundene Informationen übertragen lassen und gegebenenfalls nach einer Weiterverarbeitung auf der Darstellungseinheit (DP) in einer für den Fahrer erfaßbaren Form darstellen kann.

3. Vorrichtung nach Anspruch 1 oder 2 **dadurch gekennzeichnet, daß** die Datenübertragungseinrichtung (TRSM), die Positionsdaten des Fahrzeugs (KFZ) und/oder die Daten über die gefahrene Strecke gegebenenfalls in längeren zeitlichen Abständen aber mindestens, solange sich das Fahrzeug (KFZ) in Bewegung befindet, ständig an das mobile Terminal (MT) bzw. den Zwischenspeicher (TMEM) übermittelt.

4. Vorrichtung nach Anspruch 1 oder 2 **dadurch gekennzeichnet, daß** die Datenübertragungseinrichtung (TRSM), die Positionsdaten des Fahrzeugs (KFZ) und/oder die Daten über die gefahrene Strecke mindestens einmal an das mobile Terminal (MT) bzw. den Zwischenspeicher (TMEM) übermittelt, sobald ein Indiz für einen Parkvorgang vorliegt.

5. Vorrichtung nach Anspruch 4 **dadurch gekennzeichnet, daß** die Vorrichtung eine Parkerkennungsschaltung (PD) enthält, die mit der Datenübertragungseinrichtung (TRSM) verbunden ist und ständig überprüft, ob das Indiz für einen Parkvorgang vorliegt, und bei dessen Vorliegen, dies der Datenübertragungseinrichtung (TRSM) meldet, damit diese daraufhin die Positionsdaten des Fahrzeugs (KFZ) und/oder die Daten über die gefahrene Strecke an das mobile Terminal (MT) bzw. den Zwischenspeicher (TMEM) übermitteln kann.

6. Vorrichtung nach einem der Ansprüche 1 oder 3 bis 5 **dadurch gekennzeichnet, daß** das mobile Terminal MT zusätzlich folgende Komponenten enthält:
- eine Datenempfangseinrichtung (RECV), die die von der Datenübertragungseinrichtung (TRSM) über die Übertragungsstrecke (TR) übermittelten Positionsdaten des Fahrzeugs (KFZ) und/oder die Daten über die Fahrstrecke empfängt und falls erforderlich demoduliert und/oder dekodiert,
- eine Steuereinheit (CONTR), die mit dem Ausgang der Datenempfangseinrichtung (RECV) verbunden ist, über diese Verbindung die gegebenfalls dekodierten von der Datenübertragungseinrichtung (TRSM) an die Datenempfangseinrichtung (RECV) übermittelten Positionsdaten des Fahrzeugs und/oder die Daten über die gefahrene Strecke erhält, und die zudem mit der Speichereinheit (MEM) verbunden ist, wobei die Steuereinheit (CONTR) lesend und schreibend auf die Speichereinheit (MEM) zugreifen kann und insbesondere dort die übermittelten Positionsdaten des Fahrzeugs (KFZ) und/oder die Daten über die gefahrene Strecke gegebenenfalls komprimiert und reduziert abspeichern und später wieder auslesen kann,
- und die Darstellungseinheit (DP), die die Positionsdaten des Fahrzeugs (KFZ) und/oder die Daten über die gefahrene Strecke gegebenenfalls komprimiert und reduziert für den Fahrer erfaßbar darstellen kann, wobei die Darstellungseinheit (DP) mit der Steuereinheit (CONTR) verbunden ist und über diese Verbindung die zur Darstellung bestimmten Positionsdaten des Fahrzeugs (KFZ) und/oder die Daten der gefahrenen Strecke und/oder damit verbundene Informationen von der Steuereinheit (CONTR) erhält, nachdem diese sie zuvor aus der Speichereinheit (MEM) ausgelesen und gegebenenfalls weiterverarbeitet hat.

7. Vorrichtung nach einem der Ansprüche 1 bis 6 **dadurch gekennzeichnet, daß** das mobile Terminal (MT) aus mehreren unabhängig voneinander beweglichen Teilen besteht, wobei die einzelnen Komponenten (RECV, CONTR, MEM, DP) des mobilen Terminals (MT) beliebig auf die unabhängig voneinander beweglichen Teile aufgeteilt sein können, aber sichergestellt ist, daß die Verbindungen zwischen den Komponenten wenigstens zeitweise, wenn auch nicht unbedingt alle zur gleichen Zeit, gegebenenfalls auch drahtlos bestehen.

8. Vorrichtung nach einem der Ansprüche 1 bis 7 **dadurch gekennzeichnet, daß** das mobile Terminal (MT) wenigstens teilweise durch eine Chipkarte gebildet wird.

9. Vorrichtung nach wenigstens einem der Ansprüche 1 bis 8 **dadurch gekennzeichnet, daß** das mobile Terminal (MT) nicht als eigenständiges Gerät sondern als Bestandteil eines anderen elektronischen Gerätes, das der Fahrer mit sich führen kann, wenn er das Fahrzeug (KFZ) verläßt, ausgeführt ist.

10. Vorrichtung nach wenigstens einem der Ansprüche 1 bis 9 **dadurch gekennzeichnet, daß** es sich bei den Positionsdaten des Fahrzeugs (KFZ) um die Koordinaten des Standorts des Fahrzeugs (KFZ) oder wenigstens um den Namen der Straße, in der sich das Fahrzeug befindet, und wenigstens die ungefähre Hausnummer der Position, wo sich das Fahrzeug (KFZ) in dieser Straße befindet, oder den Namen der nächsten Querstraße handelt.

11. Vorrichtung nach Anspruch 1 bis 10 **dadurch gekennzeichnet, daß** es sich bei der Speichereinheit (MEM) um einen optischen Speicher handelt, der die Positionsdaten des Fahrzeugs und/oder die Daten über die gefahrene Strecke und/oder mit diesen verbundene Informationen in einer für den Fahrer unmittelbar wahrnehmbaren Form speichert.

12. Vorrichtung nach Anspruch 2 bis 11 **dadurch gekennzeichnet, daß** es sich bei dem mobilen Terminal (MT) um ein Mobiltelefon oder einen mobilen Rechner mit Internetanschluß und bei dem Zwischenspeicher (TMEM) um einen Rechner im Internet handelt.

13. Vorrichtung nach einem der Ansprüche 1 bis 12 **dadurch gekennzeichnet, daß** das mobile Terminal (MT) zusätzlich ein Standortbestimmungssystem (GPS) oder eine Vorrichtung zur manuellen Eingabe des Standorts des Fahrers enthält.

14. Vorrichtung nach Anspruch 2 bis 13 **dadurch gekennzeichnet, daß** die Übertragung der Positionsdaten des Fahrzeugs (KFZ) und/oder der Daten über die gefahrene Strecke zeitversetzt zum Zwischenspeicher (TMEM) erfolgt, vorzugsweise wenn zum Zeitpunkt des Parkvorgangs die erste Übertragungsstrecke (TR1) gestört ist.

15. Vorrichtung nach Anspruch 1 bis 14 **dadurch gekennzeichnet, daß** das mobile Terminal (MT) wenigstens zeit- und teilweise Bestandteil der Datenübertragungseinrichtung (TRMS) ist.

16. Vorrichtung nach einem der Ansprüche 1 bis 15 **dadurch gekennzeichnet, daß** sich im Fahrzeug (KFZ) eine Streckenaufzeichnungseinheit (RL), die mit diversen Sensoren (SENS) verbunden ist, befindet.

17. Verwendung einer der Vorrichtungen nach Anspruch 1 bis 16 zur Dokumentation von Parkvorgängen oder zur erleichterten Führung eines Fahrtenbuchs.

18. Verfahren zum Auffinden eines geparkten Fahrzeugs (KFZ) durch dessen Fahrer mit folgenden Schritten:
- ein wenigstens zeit- und teilweise im Fahrzeug befindliches Navigationssystem (NAVS) ermittelt die Positionsdaten des Fahrzeugs (KFZ) und/oder Daten über die gefahrene Strecke,
- eine Datenübertragungseinrichtung (TRMS), die mit dem Navigationssystem (NAVS) wenigstens zeitweise verbunden ist, erhält die Positionsdaten des Fahrzeugs (KFZ) und/oder die Daten über die gefahrene Strecke von Navigationssystem (NAVS) und übermittelt sie über eine Übertragungsstrecke (TR, TR1) entweder fortwährend oder immer dann, wenn ein Indiz für einen Parkvorgang vorliegt, an ein mobiles Terminal (MT), das der Fahrer mit sich führen kann, wenn er das Fahrzeug verläßt, oder einen außerhalb des Fahrzeugs befindlichen Zwischenspeicher (TMEM), wo sie gegebenenfalls nach Reduktion und Komprimierung in einer Speichereinheit (MEM) abgespeichert werden,
- spätestens wenn der Fahrer sein Fahrzeug wiederfinden möchte, liest das mobile Terminal (MT) die Positionsdaten des Fahrzeugs (KFZ) und/oder die Daten über die gefahrene Strecke und/oder damit verbundene Informationen gegebenenfalls nach einer weiteren Übertragung vom Zwischenspeicher (TMEM) zum mobilen Terminal (MT) über eine zweite Übertragungsstrecke (TR2) aus der Speichereinheit (MEM) aus und stellt sie gegebenenfalls nach einer Weiterverarbeitung auf einer Darstellungseinheit (DP) in einer für den Fahrer erfaßbaren Weise dar.

## Claims

1. Device for finding a parked vehicle (KFZ) by its driver comprising
- a navigation system (NAVS) being at least partly and temporarily aboard the vehicle that can determine and/or continuously determines position data of the vehicle and/or data about the travelled route,
- a mobile terminal unit (MT) which is at least temporarily independent from the vehicle (KFZ), which the driver can carry along when leaving the vehicle (KFZ) and which at least temporarily contains a memory unit (MEM),
- a data transmission unit (TRMS) that is at least temporarily connected with the navigation system (NAVS) and that, via this connection, can receive the position data of the vehicle and/or the data about the travelled route and that transmits the position data of the vehicle (KFZ) and/or the data about the travelled route to the mobile terminal unit MT in a wireless or a wirebound way - if need be after modulation and coding -, said mobile terminal unit (MT) receiving these data and - if need be compressed or reduced - storing them in its memory unit (MEM), the range of said transmission link (TR) being restricted to the interior and/or the direct vincinity of the vehicle (KFZ),
- a display unit (DP) at least temporarily contained in the mobile terminal unit (MT) or connected to it that allows to display the position data of the vehicle (KFZ) and/or the data about the travelled route stored in the memory unit (MEM) - if need be after an post-processing - in a way that can be percepted by the driver.

2. Device for finding a parked vehicle (KFZ) by its driver comprising
- a navigation system (NAVS) being at least partly and temporarily aboard the vehicle that can determine and/or continuously determines position data of the vehicle and/or data about the travelled route,
- an intermediate memory (TMEM) being positioned outside of the vehicle (KFZ) that features a memory unit (MEM) and a transmitting/receiving unit (R/T) connected to the memory unit,
- a data transmission unit (TRMS) that is at least temporarily connected with the navigation system (NAVS) and that, via this connection, can receive the position data of the vehicle and/or the data about the travelled route and that transmits the position data of the vehicle (KFZ) and/or the data about the travelled route to the transmitting/receiving unit (R/T) of the intermediate memory (TMEM) via a first transmission link (TR1), said intermediate memory (TMEM) storing the transmitted position data and/or the data about the travelled route in its memory unit (MEM) - if need be in a compressed or reduced way,
- a mobile terminal unit (MT) that the driver can carry along when leaving the vehicle (KFZ) and that at least temporarily contains a display unit (DP) or is connected to it, said mobile terminal unit (MT), which via a second transmission link (TR2) can establish a communication to the intermediate memory (TMEM) and can receive the position data of the vehicle (KFZ) and/or the data about the travelled route stored in the memory unit (MEM) and/or informations associated to those data, allowing to display them if need be after a post-processing in a way that can be percepted by the driver.

3. Device as claimed in claim 1 or 2 wherein the data transmission unit (TRMS) transmits the position data of the vehicle (KFZ) and/or the data about the travelled route to the mobile terminal unit (MT) or the intermediate memory (TMEM), respectively, if need be at longer temporal intervals, but - at least as long as the car is moving - continuously.

4. Device as claimed in claim 1 or 2 wherein the data transmission unit (TRMS) at least once transmits the position data of the vehicle (KFZ) and/or the data about the travelled route to the mobile terminal unit (MT) or the intermediate memory (TMEM), respectively, as soon as there is an indication of a parking process.

5. Device as claimed in claim 4 further comprising a parking detection circuit (PD), which is connected to the data transmission unit (TRMS) and continuously monitors whether there is an indication of a parking process and signals such an indication to the data transmission unit (TRMS), such that, as a result, the data transmission unit (TRMS) transmits the position data of the vehicle (KFZ) and/or the data about the travelled route to the mobile terminal unit (MT) or the intermediate memory (TMEM), respectively.

6. Device as claimed in claim 1 or 3 to 5 wherein the mobile terminal unit (MT) further comprises:
- a data receiving unit (RECV) that receives and if necessary demodulates and decodes the position data of the vehicle (KFZ) and/or the travelled route transmitted by the data transmission unit (TRMS) via the transmission link (TR);
- a control unit (CONTR), which is connected with the output of the receiving unit (RECV) and the memory unit (MEM), said control unit receiving - if need be the decoded - position data of the vehicle and/or data about the travelled route transmitted by the data transmission unit (TRMS) to the data receiving unit (RECV) and said control unit having read and write access to the memory unit (MEM) and especially being able to store and lateron read the transmitted position data of the vehicle and/or the data about the travelled route in/from the memory unit - if need be in a compressed or reduced way;
- and a display unit (DP) which can display the position data of the vehicle (KFZ) and/or the data about the travelled route - if need be in a compressed or reduced way - in a way that can be percepted by the driver, said display unit being connected with the control unit and via this connection receiving the position data of the vehicle (KFZ) and/or the data about the travelled route and/or informations associated to those data for displaying from the control unit (CONTR), after the control unit (CONTR) having read those data from the memory unit (MEM) and if need be having further processed them.

7. Device as claimed in one of the claims 1 to 6 wherein the mobile terminal unit (MT) consists of several independently mobile parts and the different components (RECV, CONT, MEM, DP) of the mobile terminal (MT) can arbitrarily be shared out to the idependently mobile parts, as long as there are - if need be wireless - connections between the different components at least temporarily, but not necessarily all at the same point of time.

8. Device as claimed in one of the claims 1 to 7 wherein the mobile terminal unit (MT) is at least partly formed by a chip card.

9. Device as claimed in one of the claims 1 to 8 wherein the mobile terminal unit is not an independent device but is an integral part of another electronic device that the driver can carry along when leaving the vehicle (KFZ).

10. Device as claimed in one of the claims 1 to 9 wherein the position data of the vehicle (KFZ) are the coordinates of the vehicle's (KFZ) location or at least the name of the street, where the vehicle (KFZ) is positioned, and the approximate house number of the vehicle's position in the street or the name of the next cross-road.

11. Device as claimed in claim 1 to 10 wherein the memory unit (MEM) is an optical memory that stores the position data of the vehicle and/or the data about the travalled route and/or informations associated to those data in a way that is directly perceptible by the driver.

12. Device as claimed in claim 2 to 11 wherein the mobile terminal unit (MT) is a mobile phone or a mobile computer with internet access and wherein the intermediate memory (TMEM) is an internet computer.

13. Device as claimed in claim 1 to 12 wherein the mobile terminal unit (MT) additionally contains a position determination system (GPS) or an input device for manual input of the driver's position.

14. Device as claimed in claim 2 to 13 wherein the transmission of the position data of the vehicle (KFZ) and/or the data about the travelled route to the intermediate memory (TMEM) is effected with a time offset, preferably, when the first transmission link (TR1) is disturbed at the time of the parking process.

15. Device as claimed in claim 1 to 14 wherein the mobile terminal unit (MT) at least partly and temporarily is an integral part of the data transmission unit (TRMS).

16. Device as claimed in claim 1 to 15 wherein a route registering unit (RL), which is connected to several sensors (SENS), is contained in the vehicle (KFZ).

17. Application of a device as claimed in claim 1 to 16 for the documentation of parking processes or for keeping a log-book.

18. Method for finding a parked vehicle (KFZ) by its driver comprising the steps of
- a navigation system (NAVS), which at least partly and temporarily is aboard the vehicle determines the position data of the vehicle and/or data about the travelled route,
- a data transmission unit (TRMS), which at least temporarily is connected with the navigation system (NAVS), receives the position data of the vehicle (KFZ) and/or the data about the travelled route from the navigation system (NAVS) and via a transmission link (TR, TR1) either continuously or whenever there is an indication of a parking process transmits them to a mobile terminal unit (MT), which the driver can carry along when leaving the car, or to an intermediate memory (TMEM),
where they - if need be after reduction and compression - are stored in a memory unit (MEM);
- at last when the driver wants to find his vehicle, the mobile terminal unit (MT) reads the position data of the vehicle (KFZ) and/or the travelled route and/or informations associated to those data from the memory unit (MEM) - if need be after a further transmission from the intermediate memory (TMEM) to the mobile terminal unit (MT) via a second transmission link (TR2) - and displays them - if need be after a post-processing - at a display unit (DP) in a way that can be percepted by the driver.

## Revendications

1. Dispositif permettant à un conducteur de retrouver son véhicule (KFZ) en stationnement
- comprenant un système de navigation (NAVS) situé partiellement et temporairement à l'intérieur du véhicule (KFZ) qui est en mesure de déterminer les coordonnée de stationnement du véhicule et/ou les données de l'itinéraire parcouru, ou bien qui les traite en permanence,
- comprenant un terminal mobile (MT), qui est au moins temporairement indépendant du véhicule (KFZ) et peut être emporté par le conducteur quand il quitte le véhicule (KFZ) et qui, au moins temporairement, dispose d'un module de mémoire (MEM),
- comprenant un module de transmission des données (TRSM), qui est connecté au moins temporairement au système de navigation (NAVS) et à l'aide de cette connexion peut recevoir les coordonnées de stationnement du véhicule et/ou les données de l'itinéraire parcouru, et qui transmet sur une première ligne intermédiaire de transmission (TR) les coordonnées de stationnement du véhicule (KFZ) et/ou les données de l'itinéraire parcouru, sans fil ou non, le cas échéant préalablement modulées et codifiées, au terminal mobile (TM) qui les reçoit et, le cas échéant comprimées et dépouillées, les mémorise dans son module de mémoire (MEM), auquel cas, le rayon effectif d'émission de la ligne intermédiaire de transmission (TR) est limité à l'intérieur du véhicule et/ou aux alentours directs du véhicule (KFZ),
- comprenant un module d'affichage (DP) incorporé ou connecté au moins temporairement au terminal mobile (MT) à l'aide duquel les coordonnées de stationnement du véhicule (KFZ) et/ou les données de l'itinéraire parcouru mémorisées dans le module de mémoire (MEM) sont transmises au conducteur dans une version intelligible, le cas échéant après un traitement complémentaire.

2. Dispositif permettant à un conducteur de retrouver son véhicule en stationnement (KFZ)
- comprenant un système de navigation (NAVS) situé partiellement et temporairement à l'intérieur du véhicule (KFZ) qui est en mesure de déterminer les coordonnée de stationnement du véhicule et/ou les données de l'itinéraire parcouru, ou bien qui les traite en permanence,
- comprenant un module de mémoire temporaire (TMEM) située à l'extérieur du véhiculé (KFZ) disposant d'un module de mémoire (MEM) relié à un module émetteur/récepteur (R/T),
- comprenant un module de transmission des données (TRSM), connecté au moins temporairement au système de navigation (NAVS) qui à l'aide de cette connexion peut recevoir les coordonnées de stationnement du véhicule (KFZ) et/ou les données de l'itinéraire parcouru et qui sur une première ligne intermédiaire de transmission (TR1) transmet les coordonnées de stationnement du véhicule (KFZ) et/ou les données de l'itinéraire parcouru au module émetteur/récepteur (R/T) du module de mémoire temporaire (TMEM), auquel cas le module de mémoire temporaire (TMEM) mémorise les coordonnées de stationnement du véhicule (KFZ) et/ou les données de l'itinéraire parcouru, le cas échéant comprimées et dépouillées, dans le module de mémoire (MEM),
- comprenant un terminal mobile (MT) que le conducteur peut emporter avec lui quand il quitte le véhicule (KFZ) auquel une unité d'affichage (DP) est, au moins temporairement, incorporée ou connectée, dans quel cas le terminal mobile (TM) peut se connecter au module de mémoire temporaire (TMEM) par une deuxième ligne intermédiaire de transmission (TR2) et se faire transmettre les coordonnées de stationnement du véhicule (KFZ) et/ou les données de l'itinéraire parcouru mémorisées par celui-ci dans le module de mémoire (MEM) et les retransmettre au conducteur dans une version intelligible, le cas échéant après un traitement complémentaire par le module d'affichage (DP).

3. Dispositif selon les revendications 1 ou 2 **caractérisé en ce que** le module de transmission (TRSM) transmet les coordonnées de stationnement du véhicule (KFZ) et/ou les données de l'itinéraire parcouru, au terminal mobile (TM) respectivement au module de mémoire temporaire (TMEM), le cas échéant à des intervalles prolongés, mais au minimum en permanence tant que le véhicule (KFZ) est en mouvement.

4. Dispositif selon les revendications 1 ou 2 **caractérisé en ce que** le module de transmission des données (TRSM) transmet les coordonnées de stationnement du véhicule (KFZ) et/ou les données de l'itinéraire parcouru au moins une fois au terminal mobile ( TM ) respectivement au module de mémoire temporaire (TMEM) dès le premier indice de stationnement du véhicule.

5. Dispositif selon la revendication 4 **caractérisé en ce que** le dispositif comprend un module d'identification de stationnement (PD) connecté au module de transmission des données (TRSM) qui contrôle constamment que l'indice de stationnement existe encore et qui, si c'est le cas, le transmet au module de transmission des données (TRSM) pour que celui-ci puisse transmettre les données de l'itinéraire parcouru au terminal mobile ( TM ), respectivement au module de mémoire temporaire (TMEM).

6. Dispositif selon une des revendications 1 ou 3 à 5 **caractérisé en ce que** le terminal mobile (MT) est équipé des composants supplémentaires suivants:
- une unité de réception des données (RECV) qui reçoit les coordonnées de stationnement du véhicule (KFZ) et/ou les données de l'itinéraire parcouru transmises du module de transmission des données (TRSM) par la ligne de transmission (TR) et qui, si nécessaire, les démodule et/ou les décode,
- une unité de contrôle (CONTR) connectée à la sortie de l'unité de réception des données (RECV) qui par cette connexion reçoit les coordonnées de stationnement du véhicule (KFZ) et/ou lés données de l'itinéraire parcouru transmises par l'unité de réception des données (RECV), le cas échéant décodées par le module de transmission des données (TRSM), et qui de plus, est connectée au module de mémoire (MEM), auquel cas, l'unité de contrôle (CONTR) peut accéder par lecture ou par écriture, au module de mémoire (MEM) où elle peut, en particulier, mémoriser et plus tard relire les coordonnées de stationnement du véhicule (KFZ) et/ou les données de l'itinéraire parcouru, le cas échéant comprimées et dépouillées,
- et une unité d'affichage (DP) qui transmet, dans une version intelligible pour le conducteur, les coordonnées de stationnement du véhicule (KFZ) et/ou les données de l'itinéraire parcouru, le cas échéant comprimées et dépouillées, auquel cas, l'unité d'affichage (DP) est connectée à l'unité de contrôle (CONTR) et par cette connexion reçoit de l'unité de contrôle (CONTR) les coordonnées de stationnement du véhicule (KFZ) et/ou les données de l'itinéraire parcouru et ou les informations qui s'y rapportent, après que celle-ci aient été sélectionnées, le cas échéant converties, par le module de mémoire (MEM).

7. Dispositif selon les revendications 1 à 6 **caractérisé en ce que** le terminal mobile (TM) est constitué de plusieurs éléments mobiles indépendants les uns des autres, auquel cas les composants (RECV, CONTR, MEM, DP) du terminal mobile (TM ) peuvent être raccordés à n'importe lequel des éléments mobiles indépendants mais sous garantie que les connexions entre les composants soient assurées au moins temporairement, le cas échéant sans fil, même s'ils ne sont pas tous connectés en même temps.

8. Dispositif selon les revendications 1 à 7 **caractérisé en ce que** le terminal mobile (TM) est, au moins en partie, une carte à puce.

9. Dispositif selon au moins une des revendications 1 à 8 **caractérisé en ce que** le terminal mobile (MT) n'est pas conçu comme un appareil complet indépendant mais est un élément d'un autre appareil électronique, que le conducteur emporte avec lui quand il quitte le véhicule (KFZ).

10. Dispositif selon au moins une des revendications 1 à 9 **caractérisé en ce que** les coordonnées de stationnement du véhicule (KFZ) et/ou les données de l'itinéraire parcouru sont les coordonnées même du lieu de stationnement du véhicule (KFZ) avec au moins le nom de la rue dans laquelle est stationné le véhicule et au moins le numéro approximatif de l'immeuble où est positionné le véhicule (KFZ) dans cette rue ou bien le nom de la rue transversale la plus proche.

11. Dispositif selon les revendications 1 à 10 **caractérisé en ce que** le module de mémoire (MEM) est une mémoire optique qui mémorise les coordonnées de stationnement du véhicule (KFZ) et/ou les données de l'itinéraire parcouru et/ou les informations qui s'y rapportent dans une version intelligible pour le conducteur.

12. Dispositif selon les revendications 2 à 11 **caractérisé en ce que** le terminal mobile ( TM ) est un téléphone mobile ou un ordinateur portable, ayant accès à Internet et **en ce que** le module de mémoire temporaire (TMEM) est une mémoire sur Internet.

13. Dispositif selon une des revendications 1 à 12 **caractérisé en ce que** le terminal mobile ( MT ) dispose d'un système de détermination des positions (GPS) ou est en mesure de communiquer manuellement les données du lieu où se trouve le conducteur.

14. Dispositif selon les revendications 2 à 11 **caractérisé en ce que** les coordonnées de stationnement du véhicule (KFZ) et/ou les données de l'itinéraire parcouru sont transférées en différé au module de mémoire temporaire (TMEM), en particulier quand, au moment du stationnement, la première ligne intermédiaire de transmission (TR1) est perturbée.

15. Dispositif selon les revendications 1 à 14 **caractérisé en ce que** le terminal mobile ( MT ) est au moins en partie et temporairement un élément du module de transmission des données (TRMS).

16. Dispositif selon les revendications 1 à 15 **caractérisé en ce que**, dans le véhicule (KFZ), se trouve une unité d'enregistrement de l'itinéraire (RL), reliée à différents détecteurs (SENS).

17. Utilisation d'un dispositif selon les revendications 1 à 16 permettant de documenter les stationnements ou bien permettant de simplifier la rédaction d'un carnet de route.

18. Procédé permettant à un conducteur de retrouver un véhicule en stationnement (KFZ) grâce aux démarches suivantes:
- un système de navigation (NAVS) situé au moins en partie et temporairement à l'intérieur du véhicule détermine les coordonnées de stationnement du véhicule (KFZ) et/ou les données de l'itinéraire parcouru,
- un module de transmission des données (TRSM) au moins en partie relié au système de navigation (NAVS) reçoit du système de navigation (NAVS) les coordonnées de stationnement du véhicule (KFZ) et/ou les données de l'itinéraire parcouru et par une ligne de transmission (TR, TR1), soit continuellement soit au moment où il existe un indice de stationnement, les transmet au terminal mobile (TM ) que le conducteur peut emporter avec lui quand il quitte le véhicule ou bien les transmet à un module de mémoire temporaire (TMEM) situé à l'extérieur du véhicule, où sont mémorisées les coordonnées préalablement comprimées et dépouillées dans un module de mémoire (TM),
- lorsque finalement le conducteur désire retrouver son véhicule, le terminal mobile (TM ) lit les coordonnées de stationnement du véhicule (KFZ) et/ou les données de l'itinéraire parcouru et/ou les informations qui s'y rapportent, le cas échéant après une retransmission supplémentaire du module de mémoire temporaire (TMEM) au terminal mobile (TM) en passant par une ligne de transmission (TR2), mémorisées dans le module de mémoire (MEM) et les transmet dans une version intelligible pour le conducteur, le cas échéant après avoir été modifiées encore une fois.
